(19) Europäisches Patentamt
European Patent Office
Office européen des brevets

(11) EP 3 287 487 B1

(12) **EUROPEAN PATENT SPECIFICATION**

(45) Date of publication and mention of the grant of the patent:
**25.03.2020 Bulletin 2020/13**

(21) Application number: **16814425.1**

(22) Date of filing: **23.06.2016**

(51) Int Cl.:
***C08L 23/00*** *(2006.01)* ***C08K 3/26*** *(2006.01)*
***C08K 5/098*** *(2006.01)* ***C08K 5/3492*** *(2006.01)*
***C08L 83/04*** *(2006.01)* ***G02B 6/44*** *(2006.01)*
***H01B 3/44*** *(2006.01)* ***H01B 7/295*** *(2006.01)*

(86) International application number:
**PCT/JP2016/068610**

(87) International publication number:
**WO 2016/208656 (29.12.2016 Gazette 2016/52)**

(54) **FLAME-RETARDANT RESIN COMPOSITION AND CABLE USING SAME, AND OPTICAL FIBER CABLE**

FLAMMHEMMENDE HARZZUSAMMENSETZUNG UND KABEL DAMIT UND GLASFASERKABEL

COMPOSITION DE RÉSINE À COMBUSTION LENTE ET CÂBLE L'UTILISANT, ET CÂBLE À FIBRES OPTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2015 JP 2015126276**
**20.10.2015 JP 2015206745**

(43) Date of publication of application:
**28.02.2018 Bulletin 2018/09**

(73) Proprietor: **Fujikura Ltd.**
**Tokyo 135-8512 (JP)**

(72) Inventors:
- **KOHRI, Haruka**
**Sakura-shi**
**Chiba 285-8550 (JP)**
- **NAKAMURA, Shoichiro**
**Sakura-shi**
**Chiba 285-8550 (JP)**
- **WATANABE, Tomohisa**
**Sakura-shi**
**Chiba 285-8550 (JP)**

(74) Representative: **Hoffmann Eitle**
**Patent- und Rechtsanwälte PartmbB**
**Arabellastraße 30**
**81925 München (DE)**

(56) References cited:
**EP-A1- 3 147 322**
**WO-A1-2014/103904**
**WO-A2-2005/030852**
**CN-A- 1 152 471**
**JP-A- H 051 180**
**JP-A- H09 169 918**
**JP-A- 2001 089 611**
**JP-A- 2005 527 670**
**JP-A- 2007 507 571**
**JP-A- 2014 028 910**
**JP-A- 2015 221 865**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 287 487 B1

## Description

### TECHNICAL FIELD

The present invention relates to a flame-retardant resin composition, and a cable and an optical fiber cable using the same.

### BACKGROUND ART

For a coating of, for example, a cable, an outer sheath of a cable, a tube, a tape, a wrapping material or a building material, a so-called eco-material is widely used.

As the eco-material, known is a flame-retardant resin composition in which a silicone compound such as silicone gum and a fatty acid containing compound such as magnesium stearate are added as a flame retardant aid to a polyolefin resin while calcium carbonate is also added as a flame retardant to the polyolefin resin (see JP-A-1997-169918).

EP-A-3 147 322 is prior art under Article 54(3) EPC and discloses a flame-retardant resin composition containing a base resin containing a polyolefin based compound and, relative to 100 parts by mass (pbm) of the base resin, 0.1-10 pbm of a silicone based compound, 0.1-20 pbm of a fatty acid metal salt, 5-200 pbm of a flame retardant agent consisting of at least one of calcium carbonate particles and silicate compound particles, 0.05-10 pbm of a hindered phenol based compound, and 0.05-10 pbm of a specific hindered amine based compound.

CN-A-1 152 471 describes a flame-resistant composition comprising a coating polymer for insulating and/or protecting cables as a matrix material, a filler which is not a Group IIA metal hydroxide or a hydrate thereof, silicone and a salt of a metal selected from Ca, Mg, Sr and Ba, wherein the salt is separated from the filler in the matrix.

WO 2005/030852 relates to a method of flame retarding a polymeric substrate using a specific group of azo and peroxide derivatives as flame retardants, to flame retardant compositions as well as to novel azo compounds usable as flame retarding compounds.

WO 2014/103904 addresses a flame-retardant resin composition which contains a base resin and, relative to 100 pbm of the base resin, 10-50 pbm of calcium carbonate particles, 0.5-10 pbm of a silicone-based compound, and 1-20 pbm of a fatty acid-containing compound, wherein the calcium carbonate particles have an average particle diameter of < 0.7 μm

JP-A-2001-089611 concerns polyolefin resin compositions comprising (A) 100 pbm of polyolefin-based resin, (B) 0.01-1.0 pbm of a hydrotalcite-based compound, (C) 0.01-1.0 pbm of a salt of a Group II metal with a higher fatty acid, (D) 0.02-1.0 pbm of hindered amine light stabilizer and (E) 0.01-1.0 pbm of a specific phenolic antioxidant.

### SUMMARY OF THE INVENTION

### PROBLEM TO BE SOLVED BY THE INVENTION

However, it is difficult to say that flame retardancy is sufficiently secured by the flame-retardant resin composition described in the above JP-A-1997-169918. Herein, if an addition amount of a flame retardant is increased, the flame retardancy can be improved. However, in this case, the mechanical characteristics of the flame-retardant resin composition deteriorate.

For such reason, required is a flame-retardant resin composition which can secure excellent mechanical characteristics as well as excellent flame retardancy.

The present invention has been made in consideration of the aforementioned circumstances, and an object of the present invention is to provide a flame-retardant resin composition which can secure excellent mechanical characteristics as well as excellent flame retardancy, and a cable and an optical fiber cable using the flame-retardant resin composition.

### MEANS FOR SOLVING PROBLEM

To solve the problems described above, the present inventors have repeated the studies. As a result, it was found by the present inventors that the aforementioned problem can be solved by blending, into a polyolefin resin, a triazine ring containing hindered amine compound which includes an oxygen atom, in addition to calcium carbonate, a silicone compound, and a fatty acid containing compound, each at a predetermined ratio.

Namely, the present invention relates to a composition which is a flame-retardant resin composition comprising:

- a polyolefin resin (i), and, per 100 parts by mass (pbm) of the polyolefin resin;

- 1.5-10 pbm of a silicone compound (ii);

- 3-20 pbm of a fatty acid containing compound (iii);

- 10 to < 120 pbm of calcium carbonate (iv); and

- 0.05 to < 10 pbm of a triazine ring containing hindered amine compound (v) having a group of formula (1):

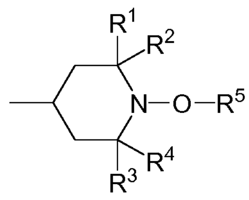

(1)

wherein $R^1$-$R^4$ each independently are $C_{1-8}$-alkyl, and $R^5$ is $C_{1-18}$-alkyl, $C_{5-12}$-cycloalkyl, an $C_{7-25}$-aralkyl or $C_{6-12}$-aryl.

According to the flame-retardant resin composition of the present invention (also referred to as "the present composition" hereinafter), excellent mechanical characteristics as well as excellent flame retardancy can be secured.

Furthermore, the present inventors surmise as follows for the reason why the above effect is obtained in the present composition.

Namely, when calcium carbonate particles, a silicone compound, and a fatty acid containing compound are contained in the present composition, a barrier layer is formed on a surface of the polyolefin resin at the time of combustion of the flame-retardant resin composition so that combustion of the polyolefin resin is suppressed. Meanwhile, when a triazine ring containing hindered amine compound including an oxygen atom is contained in the present composition, oxygen radicals are generated from the triazine ring containing hindered amine compound at the time of combustion of the present composition, and as those oxygen radicals capture hydrogen radicals that are generated due to decomposition of the polyolefin resin at the time of combustion, combustion of the polyolefin resin is suppressed. For that reason, it is considered that, due to a synergistic effect between the formation of the barrier layer at the time of combustion and the radical capturing effect, excellent flame retardancy can be obtained. It is also considered that, even with a small amount, the triazine ring containing hindered amine compound can effectively suppress combustion of the polyolefin resin due to the radical capturing effect. Accordingly, it becomes possible to reduce the blending amount of the triazine ring containing hindered amine compound relative to the polyolefin resin, and, as a result, it is considered that excellent mechanical characteristics can be secured.

In the present composition, it is preferable that the triazine ring containing hindered amine compound be blended at a ratio of 0.1 to < 10 pbm relative to 100 pbm of the polyolefin resin.

In this case, more excellent flame retardancy is obtained in the present composition compared to a case in which the blending ratio of the triazine ring containing hindered amine compound is < 0.1 pbm relative to 100 pbm of the polyolefin resin.

In the present composition, it is preferable that the triazine ring containing hindered amine compound have a group of formula (1).

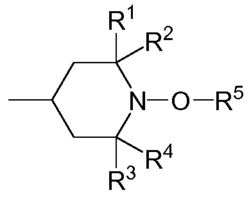

(1)

wherein $R^1$-$R^4$ each independently are $C_{1-8}$-alkyl, and $R^5$ is $C_{1-18}$-alkyl, $C_{5-12}$-cycloalkyl, an $C_{7-25}$-aralkyl or $C_{6-12}$-aryl.

In this case, more excellent flame retardancy is obtained from the presentcomposition.

In the present composition, it is preferable that in formula (1), $R^1$-$R^4$ each independently are $C_{1-3}$-alkyl, and $R^5$ is cycloalkyl.

In this case, more excellent flame retardancy is obtained from the present composition.

In the present composition, it is preferable that the triazine ring containing hindered amine compound of formula (2), wherein $R^9$ and $R^{10}$ each independently are a group of formula (1) as defined above, and $R^{11}$ and $R^{12}$ each

independently are $C_{1-18}$-alkyl:

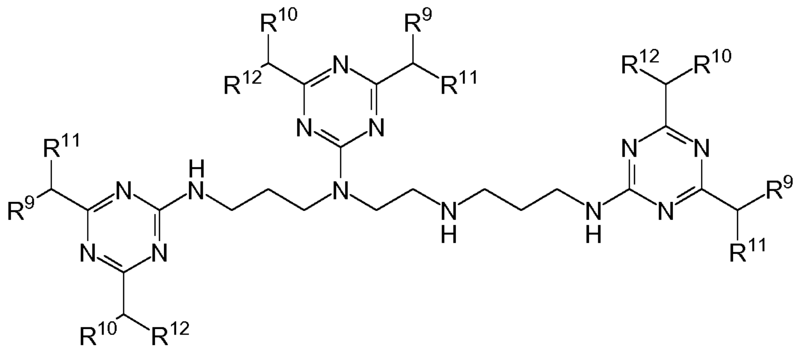

(2).

In the present composition, it is preferable that the triazine ring containing hindered amine compound be constituted by a compound of the above formula (2) in which $R^{11}$ and $R^{12}$ are $C_{1-6}$-alkyl, and in the group of formula (1) $R^1$-$R^4$ each independently are $C_{1-3}$-alkyl and $R^5$ is $C_{5-8}$-.

In this case, more excellent flame retardancy is obtained in the present composition.

In the present composition, it is preferable that the silicone compound be blended at a ratio of ≥ 1.5 pbm and < 5 pbm relative to 100 pbm of the polyolefin resin, the fatty acid containing compound be blended at a ratio of ≥ 3 pbm or more and < 5 pbm relative to 100 pbm of the polyolefin resin, and the calcium carbonate be blended at a ratio of 10-40 pbm relative to 100 pbm of the polyolefin resin.

In this case, more excellent mechanical characteristics can be obtained in the flame-retardant resin composition.

In the present composition, it is preferable that the polyolefin resin be constituted by at least one kind of polyethylene, acid modified polyethylene, an ethylene-vinyl acetate copolymer, an ethylene-ethyl acrylate copolymer, and polypropylene.

In addition, the present invention is a cable comprising a conductor and at least one insulating body for covering the conductor in which the insulating body is constituted by the present resin composition.

Moreover, the present invention is an optical fiber cable having an optical fiber and an insulating body covering the optical fiber in which the insulating body is constituted by the present composition.

EFFECT OF THE INVENTION

According to the present invention, a flame-retardant resin composition which can secure excellent mechanical characteristics as well as excellent flame retardancy, and a cable and an optical fiber cable using the flame-retardant resin composition are provided.

BRIEF DESCRIPTION OF DRAWINGS

Fig. 1 is a partial side view illustrating an embodiment of the cable of the present invention;
Fig. 2 is a cross-sectional view along the line II-II of Fig. 1; and
Fig. 3 is a cross-sectional view illustrating an embodiment of the optical fiber cable of the present invention.

MODE(S) FOR CARRYING OUT THE INVENTION

Hereinbelow, the embodiments of the present invention are explained in detail by using Fig. 1 and Fig. 2.

[Cable]

Fig. 1 is a partial side view illustrating one embodiment of the cable according to the present invention. Fig. 2 is a cross-sectional view along the line II-II of Fig. 1. As shown in Fig. 1 and Fig. 2, a round cable 10 comprises an insulating wire 4 and a tubular outer sheath 3 as an insulating body covering the insulating wire 4. Furthermore, the insulating wire 4 has an internal conductor 1 as a conductor and a tubular insulating body 2 covering the internal conductor 1. Namely, the round cable 10 is a metal cable, and in the round cable 10, the internal conductor 1 is provided on the inner side of the tubular insulating body 2 while it is simultaneously provided on the inner side of the tubular outer sheath 3.

Herein, the tubular insulating body 2 and the tubular outer sheath 3 consist of a flame retardant resin composition, which contains a polyolefin resin, a silicone compound, a fatty acid containing compound, calcium carbonate, and a triazine ring containing hindered amine compound, and the silicone compound is blended at a ratio of 1.5-10 pbm relative to 100 pbm of the polyolefin resin, the fatty acid containing compound is blended at a ratio of 3-20 pbm relative to 100 pbm of the polyolefin resin, the calcium carbonate is blended at a ratio of ≥ 10 pbm and < 120 pbm relative to 100 pbm of the polyolefin resin, the triazine ring containing hindered amine compound is blended at a ratio of ≥ 0.05 pbm and < 10 pbm relative to 100 pbm of the polyolefin resin, and the triazine ring containing hindered amine compound includes an oxygen atom.

The insulating body 2 and the outer sheath 3 consisting of the above-mentioned flame-retardant resin composition can secure excellent mechanical characteristics as well as excellent flame retardancy.

[Method for producing a cable]

Next, explanations are given for the method for producing the round cable 10 described above.

<Conductor>

First, the internal conductor 1 is prepared as a conductor. The internal conductor 1 may consist of only a single wire or consist of a bundle of plural single wires. Furthermore, the internal conductor 1 is not limited particularly in terms of conductor diameter or conductor material, and it can be suitably determined depending on use. As the internal conductor 1, metal such as copper can be used.

<Flame retardant resin composition>

Meanwhile, the present flame-retardant resin composition is prepared. As described above, the present composition contains the polyolefin resin, the silicone compound, the fatty acid containing compound, calcium carbonate, and the triazine ring containing hindered amine compound.

(1) Polyolefin resin

Examples of the polyolefin resin include polyethylene (PE), acid modified polyethylene, ethylene-vinyl acetate copolymer (EVA), ethylene-ethyl acrylate copolymer (EEA), polypropylene (PP), ethylene-methyl acrylate copolymer (EMA), ethylene-propylene copolymer, ethylene-butene copolymer, ethylene-hexene copolymer, ethylene-octene copolymer, and an olefin-based thermoplastic elastomor. They can be used either singly or in combination of two or more types thereof. Among them, it is preferable that the polyolefin resin consist of at least one kind selected from the group consisting of polyethylene, acid modified polyethylene, an ethylene-vinyl acetate copolymer, an ethylene-ethyl acrylate copolymer, and polypropylene.

(2) Silicone compound

The silicone compound functions as a flame-retardant aid, and examples of the silicone compound include polyorganosiloxane. Herein, the polyorganosiloxane has a siloxane bond in the main chain and an organic group in the side chain. Examples of the organic group include an alkyl group such as methyl, ethyl, propyl or butyl, a vinyl group, and an aryl group such as phenyl or naphthyl. Specific examples of the polyorganosiloxane include dimethyl polysiloxane, methylethyl polysiloxane, methyloctyl polysiloxane, methylvinyl polysiloxane, methylphenyl polysiloxane, and methyl(3,3,3-trifluoropropyl)polysiloxane. The polyorganosiloxane is used in the form of silicone oil, silicone powder, silicone gum, or silicone resin. In particular, the polyorganosiloxane is preferably used in the form of silicone gum. In this case, it is unlikely to have an occurrence of blooming.

As described above, the silicone compound is blended at a ratio of 1.5-10 pbm relative to 100 pbm of the polyolefin resin. In this case, more excellent flame retardancy is obtained compared to a case in which the blending ratio of the silicone compound is < 1.5 pbm. Furthermore, when the blending ratio of the silicone compound is within the above range relative to 100 pbm of the polyolefin resin, non-uniformity of the flame retardancy is lower compared to a case in which the blending ratio of the silicone compound is more than 10 pbm. That is because, as it becomes easier for the silicone compound to get uniformly blended in the polyolefin resin, a lump is unlikely to partially occur.

The blending ratio of the silicone compound relative to 100 pbm of the polyolefin resin is more preferably ≤ 8 pbm. The blending ratio of the silicone compound relative to 100 pbm of the polyolefin resin is particularly preferably ≤ 5 pbm. In this case, more excellent mechanical characteristics are obtained in the present composition compared to a case in which the blending ratio of the silicone compound is ≥ 5 pbm. Herein, the blending ratio of the silicone compound

relative to 100 pbm of the polyolefin resin is more preferably ≤ 4 pbm. In this case, more excellent mechanical characteristics are obtained in the present composition compared to a case in which the blending ratio of the silicone compound is > 4 pbm relative to 100 pbm of the polyolefin resin.

The silicone compound may be attached in advance on a surface of calcium carbonate. In this case, segregation of the silicone compound is unlikely to occur in the present composition, and thus uniformity of the characteristics of the present composition is further improved.

Examples of a method of obtaining the silicone compound attached to the surface of calcium carbonate may include a method in which the silicone compound is added to calcium carbonate to obtain a mixture, the mixture is dried for 10-40 minutes at 40-75°C, and the dried mixture is pulverized using, for example, a Henschel mixer or an atomizer.

(3) Fatty acid containing compound

The fatty acid containing compound functions as a flame-retardant aid. The fatty acid containing compound indicates a compound containing a fatty acid or a metal salt thereof. Herein, as the fatty acid, a fatty acid having 12-28 carbon atoms, for example. Examples of the fatty acid include lauric acid, myristic acid, palmitic acid, stearic acid, tuberculostearic acid, oleic acid, linoleic acid, arachidonic acid, behenic acid, and montanic acid. Among them, stearic acid or tuberculostearic acid is preferable as the fatty acid, and stearic acid is particularly preferable. In this case, more excellent flame retardancy is obtained in the present composition compared to a case in which a fatty acid other than tuberculostearic acid or stearic acid is used.

The fatty acid containing compound is preferably a fatty acid metal salt. Examples of the metal constituting the fatty acid metal salt include an alkali earth metal salt such as magnesium or calcium, zinc, and lead. As the fatty acid metal salt, magnesium stearate or calcium stearate is preferable. In this case, more excellent flame retardancy can be obtained with smaller addition amount in the present composition compared to a case in which a fatty acid metal salt other than magnesium stearate and calcium stearate is used.

As described above, the fatty acid containing compound is blended at a ratio of 3-20 pbm relative to 100 pbm of the polyolefin resin. In this case, more excellent flame retardancy is obtained in the present composition compared to a case in which the blending ratio of the fatty acid containing compound is < 3 pbm. Furthermore, when the blending ratio of the fatty acid containing compound is within the above range relative to 100 pbm of the polyolefin resin, bleeding is unlikely to occur compared to a case in which the blending ratio of the fatty acid containing compound is > 20 pbm relative to 100 pbm of the polyolefin resin.

The blending ratio of the fatty acid containing compound relative to 100 pbm of the polyolefin resin is preferably ≤ 10 pbm, more preferably ≤ 8 pbm, and particularly preferably < 5 pbm. In this case, when the blending ratio of the fatty acid containing compound is within the above range relative to 100 pbm of the polyolefin resin, more excellent mechanical characteristics are obtained in the present composition compared to a case in which the blending ratio is greater than the upper limit of each range described above.

The fatty acid containing compound can be attached in advance on a surface of calcium carbonate. In this case, segregation of the fatty acid containing compound is unlikely to occur in the flame-retardant resin composition, and thus uniformity in the characteristics of the flame-retardant resin composition is further improved. The fatty acid containing compound and the silicone compound can be attached in advance on a surface of calcium carbonate. In this case, segregation of the silicone compound and the fatty acid containing compound is unlikely to occur in the flame-retardant resin composition, and thus uniformity of the characteristics in the present composition is further improved.

Examples of a method of obtaining the silicone compound and the fatty acid containing compound attached to the surface of calcium carbonate may include a method in which the silicone compound and the fatty acid containing compound are added to calcium carbonate to obtain a mixture, the mixture is dried for 10-40 minutes at 40-75°C, and the dried mixture is pulverized using, for example, a Henschel mixer or an atomizer.

(4) Calcium carbonate

Calcium carbonate can be any of heavy calcium carbonate and light calcium carbonate.

The average particle diameter of calcium carbonate is not particularly limited, but, preferably 1.2-1.8 μm. In this case, more excellent flame retardancy as well as excellent mechanical characteristics can be secured in the present composition.

The calcium carbonate is blended at a ratio of ≥ 10 pbm and < 120 pbm relative to 100 pbm of the polyolefin resin. In this case, more excellent flame retardancy is obtained in the present composition compared to a case in which the ratio of calcium carbonate is less than 10 pbm relative to 100 pbm of the polyolefin resin.

Furthermore, as the blending ratio of calcium carbonate relative to 100 pbm of the polyolefin resin is within the above range, the mechanical characteristics of the present composition can be further improved compared to a case in which the blending ratio of calcium carbonate is ≥ 120 pbm relative to 100 pbm of the polyolefin resin.

The blending ratio of calcium carbonate relative to 100 pbm of the polyolefin resin is preferably ≤ 100 pbm, more preferably ≤ 80 pbm, and particularly preferably ≤ 60 pbm. In this case, the mechanical characteristics of the present composition can be more sufficiently improved compared to a case in which the blending ratio is out of each range described above.

In particular, the blending ratio of calcium carbonate relative to 100 pbm of the polyolefin resin is preferably 10-80 pbm, and more preferably 1040 pbm. In a case in which the blending ratio of calcium carbonate relative to 100 pbm of the polyolefin resin is within the above range, the mechanical characteristics can be more sufficiently improved while more excellent flame retardancy of the present composition can be more sufficiently secured compared to a case in which the blending ratio is greater than the upper limit of each range described above. Herein, the blending ratio of calcium carbonate relative to 100 pbm of the polyolefin resin can also be ≤ 20 pbm.

Furthermore, in a case in which the silicone compound is blended at a ratio of ≥ 1.5 pbm and < 5 pbm relative to 100 pbm of the polyolefin resin, it is preferable that the fatty acid containing compound be blended at a ratio of ≥ 3 pbm and < 5 pbm relative to 100 pbm of the polyolefin resin and calcium carbonate be blended at a ratio of 10-40 pbm relative to 100 pbm of the polyolefin resin.

In this case, more excellent mechanical characteristics can be obtained in the present composition.

(5) Triazine ring containing hindered amine compound

The triazine ring containing hindered amine compound is not particularly limited as long as it is a compound which has a group of formula (1).

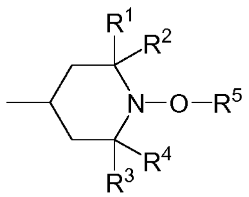

(1)

wherein $R^1$-$R^4$ each independently are $C_{1-8}$-alkyl, and $R^5$ is $C_{1-18}$-alkyl, $C_{5-12}$-cycloalkyl, an $C_{7-25}$-aralkyl or $C_{6-12}$-aryl.

Examples of the alkyl group represented by $R^1$-$R^4$ in formula (1) include methyl, ethyl, propyl, butyl, pentyl, hexyl, heptyl and octyl.

Herein, not only an unsubstituted alkyl group but also a substituted alkyl group is included in the "alkyl group". As the substituted alkyl group, an alkyl group in which the hydrogen atom of an unsubstituted alkyl group is substituted with a halogen atom such as chlorine can be used.

Examples of the alkyl group represented by $R^5$ in formula (1) include methyl, ethyl, propyl, butyl, pentyl, hexyl, heptyl, octyl, nonyl, decyl, undecyl, dodecyl, tridecyl, tetradecyl, pentadecyl, hexadecyl, heptadecyl and octadecyl.

Examples of the cycloalkyl group represented by $R^5$ include cyclopentyl, cyclohexyl, cycloheptyl, cyclooctyl, cyclononyl, cyclodecyl, cycloundecyl and cyclododecyl.

Examples of the aralkyl group represented by $R^5$ include benzyl (phenylmethyl), phenylethyl, phenylpropyl, diphenylmethyl and triphenylmethyl.

Examples of the aryl group represented by $R^5$ include phenyl and naphthyl.

In the above formula (1), it is preferable that $R^1$-$R^4$ each independently are $C_{1-3}$-alkyl and $R^5$ is $C_{5-8}$-cycloalkyl.

In this case, more excellent flame retardancy can be obtained in the flame-retardant resin composition.

Examples of the triazine ring containing hindered amine compound which has a group of formula (1) include a compound of formula (2)), wherein $R^9$ and $R^{10}$ each independently are a group of formula (1) as defined above, and $R^{11}$ and $R^{12}$ each independently are $C_{1-18}$-alkyl:

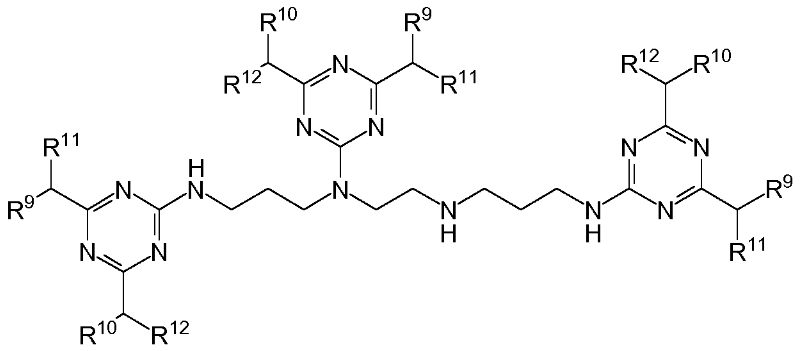

(2).

Examples of the alkyl group represented by $R^{11}$ and $R^{12}$ include the same as the alkyl group represented by $R^5$ in formula (1).

As the triazine ring containing hindered amine compound, a compound of the above formula (2) in which $R^1$-$R^4$ each independently are $C_{1-3}$-alkyl, and $R^5$ is $C_{5-8}$-cycloalkyl in formula (1) and $R^{11}$ and $R^{12}$ are $C_{1-6}$-alkyl in formula (3) is preferable. In this case, more excellent flame retardancy is obtained in the present composition.

Specific examples of the triazine ring containing hindered amine compound include a compound of the above formula (2) and in which $R^1$-$R^4$ are methyl and $R^5$ is a cyclohexyl in the formula (1), $R^{11}$ and $R^{12}$ are butyl, $R^6$-$R^8$ are mutually the same, and $R^9$ and $R^{10}$ are mutually the same (trade name: "FLAMESTAB NOR 116FF", manufactured by BASF), a compound which has a group of the above formula (1) and a group of the following partial structure of the above formula (2)

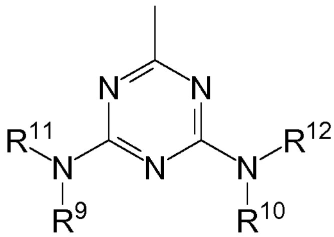

(product name: "CYASORB UV-3529", manufactured by Sun Chemical Company Ltd.).

The triazine ring containing hindered amine compound is blended at a ratio of 0.05 pbm or more and less than 10 pbm relative to 100 pbm of the polyolefin resin.

In this case, more excellent flame retardancy can be obtained in the flame-retardant resin composition compared to a case in which the blending ratio of the triazine ring containing hindered amine compound is < 0.05 pbm relative to 100 pbm of the polyolefin resin. Furthermore, when the blending ratio of the triazine ring containing hindered amine compound is within the above range relative to 100 pbm of the polyolefin resin, the mechanical characteristics and flame retardancy of the flame-retardant resin composition can be further improved compared to a case in which the blending ratio of the triazine ring containing hindered amine compound is ≥ 10 pbm relative to 100 pbm of the polyolefin resin.

Furthermore, the blending ratio of the triazine ring containing hindered amine compound relative to 100 pbm of the polyolefin resin is preferably ≥ 0.1 pbm. In this case, more excellent flame retardancy can be obtained in the flame-retardant resin composition compared to a case in which the blending ratio of the triazine ring containing hindered amine compound is < 0.1 pbm relative to 100 pbm of the polyolefin resin.

Furthermore, the blending ratio of the triazine ring containing hindered amine compound relative to 100 pbm of the polyolefin resin is preferably ≤ 3 pbm, and more preferably ≤ 1 pbm. In this case, it becomes possible that the present composition has excellent mechanical characteristics while securing the flame retardancy.

The resent composition may include an antioxidant, a UV degradation preventing agent, a processing aid, a coloring pigment, a lubricating agent, and a filler such as carbon black, if necessary.

The present composition can be obtained by, for example, kneading the polyolefin resin, the silicone compound, the fatty acid containing compound, the calcium carbonate and the triazine ring containing hindered amine compound. Kneading can be carried out by using a kneading machine such as a Banbury mixer, a tumbler, a pressure kneader, a kneading and extruding machine, a biaxial extruding machine or a mixing roll. At this time, from the viewpoint of improving the dispersion property of the silicone compound, it is possible that part of the polyolefin resin is kneaded with the silicone compound, and then the obtained master batch (MB) is kneaded with the remaining polyolefin resin, the fatty acid containing compound, calcium carbonate and the triazine ring containing hindered amine.

Next, the internal conductor 1 is covered with the flame-retardant resin composition. Specifically, the flame-retardant resin composition is melt-kneaded using an extruding machine to form a tubular extrudate. Then, the tubular extrudate is continuously coated onto the internal conductor 1. Thus, the insulating wire 4 is obtained.

<Outer sheath>

Finally, one insulating wire 4 which has been obtained as described above is prepared, and this insulating wire 4 is covered with the outer sheath 3 which has been prepared using the flame-retardant resin composition described above. The outer sheath 3 is a so-called sheath, and it protects the insulating body 2 from physical or chemical damages.

The round cable 10 is obtained as described above.

The present invention is not limited to the above embodiment. For example, although the round cable 10 having one insulating wire 4 is used as a cable in the above embodiment, the cable of the present invention is not limited to a round cable, and it may be a cable which has two or more insulating wire 4 on the inner side of the outer sheath 3. A resin part consisting of e.g. polypropylene may be provided between the outer sheath 3 and the insulating wire 4.

Furthermore, although the insulating body 2 and the outer sheath 3 of the insulating wire 4 is formed of the flame-retardant resin composition in the above embodiment, the insulating body 2 may consist of a typical insulating resin and only the outer sheath 3 may consist of the flame-retardant resin composition. Furthermore, the insulating body 2 is not necessarily required, and it can be omitted.

Furthermore, in the above embodiment, the flame-retardant resin composition constituting the insulating body 2 and the outer sheath 3 of the insulating wire 4 can also be applied to an outer sheath covering an optical fiber of an optical fiber cable. For example, Fig. 3 is a cross-sectional view illustrating a drop type optical fiber cable as an example of the optical fiber cable. As shown in Fig. 3, an optical fiber cable 20 is provided with a supporting line 21, two tension members 22 and 23, an optical fiber 24, and an outer sheath 25 as an insulating body covering them. Herein, the outer sheath 25 is formed of the flame-retardant resin composition which constitutes the insulating body 2 and the outer sheath 3 of the insulating wire 4.

Furthermore, the present composition can be applied not only to the insulating body of the cable or the optical fiber cable described above but also to various uses such as a tube, a tape, wrapping material, and building material for which flame retardancy is required.

EXAMPLES

Hereinbelow, the contents of the present invention are more specifically explained in view of Examples and Comparative Examples. However, the present invention is not limited to the following Examples.

(Examples 1-88 and Comparative Examples 1-54)

A polyolefin resin, a silicone master batch (a silicone MB), a fatty acid containing compound, calcium carbonate, and a triazine ring containing hindered amine compound (HALS) were blended in the blending amount shown in Tables 1-25 and kneaded for 15 minutes at 160°C by using a Banbury mixer and a flame-retardant resin composition was obtained. Furthermore, in Tables 1-25, unit of the blending amount for each blending component is pbm. Furthermore, although there are some cases in Tables 1-25 in which the blending amount in the polyolefin resin part is not 100 pbm, the total blending amount becomes 100 pbm when the blending amount of the polyolefin resin and the blending amount of polyethylene (PE) included in the silicone MB are added.

As the above polyolefin resin, the silicone MB, the calcium carbonate, the fatty acid containing compound, and HALS, the followings were specifically used.

(1) Polyolefin resin

(1-1) Polyethylene (PE)

Trade name "EXCELLEN GMH GH030", manufactured by Sumitomo Chemical Company Limited

(1-2) Acid modified polyethylene (acid modified PE)

Trade name "TAFMER MA8510", manufactured by Mitsui Chemicals Inc.

(1-3) Polypropylene (PP)

Trade name "J-452HP", manufactured by Prime Polymer (1-4) Ethylene ethylacrylate copolymer (EEA)
Trade name "REXPEARL A1150", manufactured by Japan Polyethylene Corporation

(1-5) Ethylene vinyl acetate copolymer (EVA)

Trade name "EVAFLEX EV150", manufactured by Mitsui DuPont Polychemicals Co., Ltd.

(1-6) Styrene ethylenebutadiene styrene copolymer (SEBS)

Trade name "TUFTEC M1913", manufactured by Asahi Kasei Polychemicals

(1-7) Styrene butadiene rubber (SBR)

Trade name "DYNARON 1320P", manufactured by JSR Corporation

(2) Silicone MB

Trade name "X-22-2125H", manufactured by Shin-Etsu Chemical Co., Ltd. (containing 50% by mass of silicone gum and 50% by mass of PE)

(3) Silicone oil

Trade name "KF-96-350cs", manufactured by Shin-Etsu Chemical Co., Ltd.

(4) Calcium carbonate

Trade name "NCC-P", manufactured by Nitto Funka Kogyo K.K., average particle diameter of 1.7 μm

(5) Fatty acid containing compound

(5-1) Mg stearate

Trade name "AFCO CHEM MGS", manufactured by ADEKA Corporation

(5-2) Zn stearate

Trade name "Zinc stearate G", manufactured by NOF Corporation

(6) HALS

(6-1) HALS1

A compound of the above formula (2) wherein $R^1$-$R^4$ are methyl and $R^5$ is cyclohexyl in the formula (1), and $R^{11}$ and $R^{12}$ are butyl group, $R^6$-$R^8$ are mutually the same and $R^9$-$R^{10}$ are mutually the same.
Trade name "FLAMESTAB NOR 116FF", manufactured by BASF (6-2) HALS2
Trade name "CYASORB UV-3529", manufactured by Sun Chemical Company Ltd.
Subsequently, the flame-retardant resin composition was added to a monoaxial extruding machine (L/D = 20, screw shape: full flight screw, manufactured by Marth Seiki Co., Ltd.). A tubular extrudate was extruded from the extruding machine and coated onto a conductor (number of single wire: 1 piece/unit area: 2 $mm^2$) such that the thickness is 0.7 mm. Thus, an insulating wire was obtained

[Table 1]

| | | | | Comparative Example 1 | Example 1 | Example 2 | Example 3 | Example 4 | Example 5 | Example 6 | Comparative Example 2 |
|---|---|---|---|---|---|---|---|---|---|---|---|
| Composition | Polyolefin resin | PE | | 97 | 97 | 97 | 97 | 97 | 97 | 97 | 97 |
| | Silicone MB | PE/Silicone gum | | 3/3 | 3/3 | 3/3 | 3/3 | 3/3 | 3/3 | 3/3 | 3/3 |
| | Fatty acid containing compound | Mg stearate | | 5 | 5 | 5 | 5 | 5 | 5 | 5 | 5 |
| | HALS | HALS1 | | | 0.05 | 0.1 | 0.5 | 1 | 3 | 5 | 10 |
| | Calcium carbonate | | | 40 | 40 | 40 | 40 | 40 | 40 | 40 | 40 |
| Characteristics | Mechanical characteristics | Tensile strength (MPa) | | 15.7 | 15.8 | 15.7 | 15.6 | 15.2 | 15.4 | 15.0 | 14.2 |
| | Flame retardancy | Vertical flame test | Pass rate (%) | 0 | 80 | 100 | 100 | 100 | 100 | 100 | 60 |

[Table 2]

| | | | | Comparative Example 3 | Comparative Example 4 | Example 7 | Example 3 | Example 8 | Comparative Example 5 |
|---|---|---|---|---|---|---|---|---|---|
| Composition | Polyolefin resin | PE | | 97 | 97 | 97 | 97 | 97 | 97 |
| | Silicone MB | PE/Silicone gum | | 3/3 | 3/3 | 3/3 | 3/3 | 3/3 | 3/3 |
| | Fatty acid containing compound | Mg stearate | | 5 | 5 | 5 | 5 | 5 | 5 |
| | HALS | HALS1 | | 0.5 | 0.5 | 0.5 | 0.5 | 0.5 | 0.5 |
| | Calcium carbonate | | | | 5 | 10 | 40 | 100 | 120 |
| Characteristics | Mechanical characteristics | Tensile strength (MPa) | | 19.4 | 18.9 | 18.6 | 15.6 | 10.7 | 9.6 |
| | Flame retardancy | Vertical flame test | Pass rate (%) | 0 | 40 | 100 | 100 | 100 | 100 |

[Table 3]

| | | | | Comparative Example 6 | Comparative Example 7 | Example 9 | Example 3 | Example 10 | Example 11 |
|---|---|---|---|---|---|---|---|---|---|
| Composition | Polyolefin resin | PE | | 97 | 97 | 97 | 97 | 97 | 97 |
| | Silicone MB | PE/Silicone gum | | 3/3 | 3/3 | 3/3 | 3/3 | 3/3 | 3/3 |
| | Fatty acid containing compound | Mg stearate | | | 2 | 3 | 5 | 10 | 20 |
| | HALS | HALS1 | | 0.5 | 0.5 | 0.5 | 0.5 | 0.5 | 0.5 |
| | Calcium carbonate | | | 40 | 40 | 40 | 40 | 40 | 40 |
| Characteristics | Mechanical characteristics | Tensile strength (MPa) | | 16.6 | 16.1 | 16.0 | 15.6 | 15.1 | 14.4 |
| | Flame retardancy | Vertical flame test | Pass rate (%) | 0 | 0 | 100 | 100 | 100 | 100 |

[Table 4]

| | | | | Comparative Example 8 | Comparative Example 9 | Example 12 | Example 3 | Example 13 | Example 14 |
|---|---|---|---|---|---|---|---|---|---|
| Composition | Polyolefin resin | PE | | 100 | 99.5 | 98.5 | 97 | 95 | 90 |
| | Silicone MB | PE/Silicone gum | | | 0.5/0.5 | 1.5/1.5 | 3/3 | 5/5 | 10/10 |
| | Fatty acid containing compound | Mg stearate | | 5 | 5 | 5 | 5 | 5 | 5 |
| | HALS | HALS1 | | 0.5 | 0.5 | 0.5 | 0.5 | 0.5 | 0.5 |
| | Calcium carbonate | | | 40 | 40 | 40 | 40 | 40 | 40 |
| Characteristics | Mechanical characteristics | Tensile strength (MPa) | | 15.8 | 15.6 | 15.9 | 15.6 | 15.0 | 14.0 |
| | Flame retardancy | Vertical flame test | Pass rate (%) | 0 | 0 | 100 | 100 | 100 | 100 |

[Table 5]

| | | | | Comparative Example 10 | Example 15 | Example 16 | Example 17 | Example 18 | Example 19 | Example 20 | Comparative Example 11 |
|---|---|---|---|---|---|---|---|---|---|---|---|
| Composition | Polyolefin resin | PE | | 87 | 87 | 87 | 87 | 87 | 87 | 87 | 87 |
| | | Acid modified | | 10 | 10 | 10 | 10 | 10 | 10 | 10 | 10 |
| | Silicone MB | PE/Silicone gum | | 3/3 | 3/3 | 3/3 | 3/3 | 3/3 | 3/3 | 3/3 | 3/3 |
| | Fatty acid containing compound | Mg stearate | | 5 | 5 | 5 | 5 | 5 | 5 | 5 | 5 |
| | HALS | HALS1 | | | 0.05 | 0.1 | 0.5 | 1 | 3 | 5 | 10 |
| | Calcium carbonate | | | 40 | 40 | 40 | 40 | 40 | 40 | 40 | 40 |
| Characteristics | Mechanical characteristics | Tensile strength (MPa) | | 15.9 | 16.0 | 15.9 | 15.8 | 15.4 | 15.6 | 15.2 | 14.4 |
| | Flame retardancy | Vertical flame test | Pass rate (%) | 0 | 80 | 100 | 100 | 100 | 100 | 100 | 60 |

[Table 6]

| | | | | Comparative Example 12 | Comparative Example 13 | Example 21 | Example 17 | Example 22 | Comparative Example 14 |
|---|---|---|---|---|---|---|---|---|---|
| Composition | Polyolefin resin | PE | | 87 | 87 | 87 | 87 | 87 | 87 |
| | | Acid modified | | 10 | 10 | 10 | 10 | 10 | 10 |
| | Silicone MB | PE/Silicone gum | | 3/3 | 3/3 | 3/3 | 3/3 | 3/3 | 3/3 |
| | Fatty acid containing compound | Mg stearate | | 5 | 5 | 5 | 5 | 5 | 5 |
| | HALS | HALS1 | | 0.5 | 0.5 | 0.5 | 0.5 | 0.5 | 0.5 |
| | Calcium carbonate | | | | 5 | 10 | 40 | 100 | 120 |
| Characteristics | Mechanical characteristics | Tensile strength (MPa) | | 19.6 | 19.1 | 18.8 | 15.8 | 10.9 | 9.8 |
| | Flame retardancy | Vertical flame test | Pass rate (%) | 0 | 40 | 100 | 100 | 100 | 100 |

[Table 7]

| | | | Comparative Example 15 | Comparative Example 16 | Example 23 | Example 17 | Example 24 | Example 25 |
|---|---|---|---|---|---|---|---|---|
| Composition | Polyolefin resin | PE | 87 | 87 | 87 | 87 | 87 | 87 |
| | | Acid modified PE | 10 | 10 | 10 | 10 | 10 | 10 |
| | Silicone MB | PE/Silicone gum | 3/3 | 3/3 | 3/3 | 3/3 | 3/3 | 3/3 |
| | Fatty acid containing compound | Mg stearate | | 2 | 3 | 5 | 10 | 20 |
| | HALS | HALS1 | 0.5 | 0.5 | 0.5 | 0.5 | 0.5 | 0.5 |
| | Calcium carbonate | | 40 | 40 | 40 | 40 | 40 | 40 |
| Characteristics | Mechanical characteristics | Tensile strength (MPa) | 16.2 | 16.0 | 16.3 | 15.8 | 15.4 | 14.4 |
| | Flame retardancy | Vertical flame test / Pass rate (%) | 0 | 0 | 100 | 100 | 100 | 100 |

[Table 8]

| | | | | Comparative Example 17 | Comparative Example 18 | Example 26 | Example 17 | Example 27 | Example 28 |
|---|---|---|---|---|---|---|---|---|---|
| Composition | Polyolefin resin | PE | | 90 | 89.5 | 88.5 | 87 | 85 | 80 |
| | | Acid modified PE | | 10 | 10 | 10 | 10 | 10 | 10 |
| | Silicone MB | PE/Silicone gum | | | 0.5/0.5 | 1.5/1.5 | 3/3 | 5/5 | 10/10 |
| | Fatty acid containing compound | Mg stearate | | 5 | 5 | 5 | 5 | 5 | 5 |
| | HALS | HALS1 | | 0.5 | 0.5 | 0.5 | 0.5 | 0.5 | 0.5 |
| | Calcium carbonate | | | 40 | 40 | 40 | 40 | 40 | 40 |
| Characteristics | Mechanical characteristics | Tensile strength (MPa) | | 16 | 15.8 | 16.1 | 15.8 | 15.2 | 14.2 |
| | Flame retardancy | Vertical flame test | Pass rate (%) | 0 | 0 | 100 | 100 | 100 | 100 |

[Table 9]

| | | | | Comparative Example 19 | Example 29 | Example 30 | Example 31 | Example 32 | Example 33 | Example 34 | Comparative Example 20 |
|---|---|---|---|---|---|---|---|---|---|---|---|
| Composition | Polyolefin resin | PP | | 97 | 97 | 97 | 97 | 97 | 97 | 97 | 97 |
| | Silicone MB | PE/Silicone gum | | 3/3 | 3/3 | 3/3 | 3/3 | 3/3 | 3/3 | 3/3 | 3/3 |
| | Fatty acid containing compound | Mg stearate | | 5 | 5 | 5 | 5 | 5 | 5 | 5 | 5 |
| | HALS | HALS1 | | | 0.05 | 0.1 | 0.5 | 1 | 3 | 5 | 10 |
| | Calcium carbonate | | | 40 | 40 | 40 | 40 | 40 | 40 | 40 | 40 |
| Characteristics | Mechanical characteristics | Tensile strength (MPa) | | 20.5 | 20.6 | 20.5 | 20.4 | 20.0 | 20.2 | 19.8 | 19.0 |
| | Flame retardancy | Vertical flame test | Pass rate (%) | 0 | 80 | 100 | 100 | 100 | 100 | 100 | 60 |

[Table 10]

| | | | | Comparative Example 21 | Comparative Example 22 | Example 35 | Example 31 | Example 36 | Comparative Example 23 |
|---|---|---|---|---|---|---|---|---|---|
| Composition | Polyolefin resin | PP | | 97 | 97 | 97 | 97 | 97 | 97 |
| | Silicone MB | PE/Silicone gum | | 3/3 | 3/3 | 3/3 | 3/3 | 3/3 | 3/3 |
| | Fatty acid containing compound | Mg stearate | | 5 | 5 | 5 | 5 | 5 | 5 |
| | HALS | HALS1 | | 0.5 | 0.5 | 0.5 | 0.5 | 0.5 | 0.5 |
| | Calcium carbonate | | | | 5 | 10 | 40 | 100 | 120 |
| Characteristics | Mechanical characteristics | Tensile strength (MPa) | | 26 | 25.1 | 24.1 | 20.4 | 12.5 | 9.9 |
| | Flame retardancy | Vertical flame test | Pass rate (%) | 0 | 40 | 100 | 100 | 100 | 100 |

[Table 11]

| | | | | Comparative Example 24 | Comparative Example 25 | Example 37 | Example 31 | Example 38 | Example 39 |
|---|---|---|---|---|---|---|---|---|---|
| Composition | Polyolefin resin | PP | | 97 | 97 | 97 | 97 | 97 | 97 |
| | Silicone MB | PE/Silicone gum | | 3/3 | 3/3 | 3/3 | 3/3 | 3/3 | 3/3 |
| | Fatty acid containing compound | Mg stearate | | | 2 | 3 | 5 | 10 | 20 |
| | HALS | HALS1 | | 0.5 | 0.5 | 0.5 | 0.5 | 0.5 | 0.5 |
| | Calcium carbonate | | | 40 | 40 | 40 | 40 | 40 | 40 |
| Characteristics | Mechanical characteristics | Tensile strength (MPa) | | 21.4 | 20.9 | 20.8 | 20.4 | 19.9 | 19.2 |
| | Flame retardancy | Vertical flame test | Pass rate (%) | 0 | 0 | 100 | 100 | 100 | 100 |

[Table 12]

| | | | Comparative Example 26 | Comparative Example 27 | Example 40 | Example 31 | Example 41 | Example 42 |
|---|---|---|---|---|---|---|---|---|
| Composition | Polyolefin resin | PP | 100 | 99.5 | 98.5 | 97 | 95 | 90 |
| | Silicone MB | PE/Silicone gum | | 0.5/0.5 | 1.5/1.5 | 3/3 | 5/5 | 10/10 |
| | Fatty acid containing compound | Mg stearate | 5 | 5 | 5 | 5 | 5 | 5 |
| | HALS | HALS1 | 0.5 | 0.5 | 0.5 | 0.5 | 0.5 | 0.5 |
| | Calcium carbonate | | 40 | 40 | 40 | 40 | 40 | 40 |
| Characteristics | Mechanical characteristics | Tensile strength (MPa) | 20.6 | 20.4 | 20.7 | 20.4 | 19.8 | 18.8 |
| | Flame retardancy | Vertical flame test / Pass rate (%) | 0 | 0 | 100 | 100 | 100 | 100 |

[Table 13]

| | | | | Example 3 | Example 31 | Example 17 | Example 43 | Example 44 | Example 45 | Example 46 |
|---|---|---|---|---|---|---|---|---|---|---|
| Composition | Polyolefin resin | PE | | 97 | | 87 | 87 | 87 | | |
| | | PP | | | 97 | | | | 87 | 87 |
| | | Acid modified PE | | | | 10 | | | | |
| | | EEA | | | | | 10 | | | |
| | | EVA | | | | | | 10 | | |
| | | SEBS | | | | | | | 10 | |
| | | SBR | | | | | | | | 10 |
| | Silicone MB | PE/Silicone gum | | 3/3 | 3/3 | 3/3 | 3/3 | 3/3 | 3/3 | 3/3 |
| | Fatty acid containing compound | Mg stearate | | 5 | 5 | 5 | 5 | 5 | 5 | 5 |
| | HALS | HALS1 | | 0.5 | 0.5 | 0.5 | 0.5 | 0.5 | 0.5 | 0.5 |
| | Calcium carbonate | | | 40 | 40 | 40 | 40 | 40 | 40 | 40 |
| Characteristics | Mechanical characteristics | Tensile strength (MPa) | | 15.6 | 20.4 | 15.8 | 13.5 | 12.5 | 23.5 | 25.6 |
| | Flame retardancy | Verticalflame test | Pass rate (%) | 100 | 100 | 100 | 100 | 100 | 100 | 100 |

[Table 14]

| | | | | Comparative Example 28 | Example 47 | Example 48 | Example 49 | Example 50 | Example 51 | Example 52 | Comparative Example 29 |
|---|---|---|---|---|---|---|---|---|---|---|---|
| Composition | Polyolefin resin | PE | | 100 | 100 | 100 | 100 | 100 | 100 | 100 | 100 |
| | Silicone MB | Silicone MB (PE/ Silicone gum) | | | | | | | | | |
| | Silicone oil | | | 3 | 3 | 3 | 3 | 3 | 3 | 3 | 3 |
| | Fatty acid containing compound | Mg stearate | | 5 | 5 | 5 | 5 | 5 | 5 | 5 | 5 |
| | HALS | HALS1 | | | 0.05 | 0.1 | 0.5 | 1 | 3 | 5 | 10 |
| | Calcium carbonate | | | 40 | 40 | 40 | 40 | 40 | 40 | 40 | 40 |
| Characteristics | Mechanical characteristics | Tensile strength (MPa) | | 15.2 | 15.3 | 15.2 | 15.1 | 14.7 | 14.9 | 14.5 | 13.7 |
| | Flame retardancy | Vertical flame test | Pass rate (%) | 0 | 80 | 100 | 100 | 100 | 100 | 100 | 60 |

[Table 15]

| | | | | Comparative Example 30 | Comparative Example 31 | Example 53 | Example 49 | Example 54 | Comparative Example 32 |
|---|---|---|---|---|---|---|---|---|---|
| Composition | Polyolefin resin | PE | | 100 | 100 | 100 | 100 | 100 | 100 |
| | Silicone MB | Silicone MB (PE/Silicone gum) | | | | | | | |
| | Silicone oil | | | 3 | 3 | 3 | 3 | 3 | 3 |
| | Fatty acid containing compound | Mg stearate | | 5 | 5 | 5 | 5 | 5 | 5 |
| | HALS | HALS1 | | 0.5 | 0.5 | 0.5 | 0.5 | 0.5 | 0.5 |
| | Calcium carbonate | | | | 5 | 10 | 40 | 100 | 120 |
| Characteristics | Mechanical characteristics | Tensile strength (MPa) | | 18.9 | 18.4 | 18.1 | 15.1 | 10.2 | 9.1 |
| | Flame retardancy | Vertical flame test | Pass rate (%) | 0 | 40 | 100 | 100 | 100 | 100 |

[Table 16]

| | | | | Comparative Example 33 | Comparative Example 34 | Example 55 | Example 49 | Example 56 | Example 57 |
|---|---|---|---|---|---|---|---|---|---|
| Composition | Polyolefin resin | PE | | 100 | 100 | 100 | 100 | 100 | 100 |
| | Silicone MB | Silicone MB (PE/Silicone gum) | | | | | | | |
| | Silicone oil | | | 3 | 3 | 3 | 3 | 3 | 3 |
| | Fatty acid containing compound | Mg stearate | | | 2 | 3 | 5 | 10 | 20 |
| | HALS | HALS1 | | 0.5 | 0.5 | 0.5 | 0.5 | 0.5 | 0.5 |
| | Calcium carbonate | | | 40 | 40 | 40 | 40 | 40 | 40 |
| Characteristics | Mechanical characteristics | Tensile strength (MPa) | | 16.1 | 15.6 | 15.5 | 15.1 | 14.6 | 13.9 |
| | Flame retardancy | Vertical flame test | Pass rate (%) | 0 | 0 | 100 | 100 | 100 | 100 |

[Table 17]

| | | | | Comparative Example 35 | Comparative Example 36 | Example 58 | Example 49 | Example 59 | Example 60 |
|---|---|---|---|---|---|---|---|---|---|
| Composition | Polyolefin resin | PE | | 100 | 100 | 100 | 100 | 100 | 100 |
| | Silicone MB | Silicone MB (PE/Silicone gum) | | | | | | | |
| | Silicone oil | | | | 0.5 | 1.5 | 3 | 5 | 10 |
| | Fatty acid containing compound | Mg stearate | | 5 | 5 | 5 | 5 | 5 | 5 |
| | HALS | HALS1 | | 0.5 | 0.5 | 0.5 | 0.5 | 0.5 | 0.5 |
| | Calcium carbonate | | | 40 | 40 | 40 | 40 | 40 | 40 |
| Characteristics | Mechanical characteristics | Tensile strength (MPa) | | 15.3 | 15.1 | 15.4 | 15.1 | 14.5 | 13.5 |
| | Flame retardancy | Vertical flame test | Pass rate (%) | 0 | 0 | 100 | 100 | 100 | 100 |

[Table 18]

| | | | Comparative Example 37 | Example 61 | Example 62 | Example 63 | Example 64 | Example 65 | Example 66 | Comparative Example 38 |
|---|---|---|---|---|---|---|---|---|---|---|
| Composition | Polyolefin resin | PE | 97 | 97 | 97 | 97 | 97 | 97 | 97 | 97 |
| | Silicone MB | Silicone MB (PE/ Silicone gum) | 3/3 | 3/3 | 3/3 | 3/3 | 3/3 | 3/3 | 3/3 | 3/3 |
| | Fatty acid containing compound | Mg stearate | | | | | | | | |
| | | Zn stearate | 5 | 5 | 5 | 5 | 5 | 5 | 5 | 5 |
| | HALS | HALS1 | | 0.05 | 0.1 | 0.5 | 1 | 3 | 5 | 10 |
| | Calcium carbonate | | 40 | 40 | 40 | 40 | 40 | 40 | 40 | 40 |
| Characteristics | Mechanical characteristics | Tensile strength (MPa) | 15.6 | 15.7 | 15.6 | 15.5 | 15.1 | 15.3 | 14.9 | 14.1 |
| | Flame retardancy | Vertical flame test Pass rate (%) | 0 | 80 | 100 | 100 | 100 | 100 | 100 | 60 |

[Table 19]

| | | | | Comparative Example 39 | Comparative Example 40 | Example 67 | Example 63 | Example 68 | Comparative Example 41 |
|---|---|---|---|---|---|---|---|---|---|
| Composition | Polyolefin resin | PE | | 97 | 97 | 97 | 97 | 97 | 97 |
| | Silicone MB | Silicone MB (PE/Silicone gum) | | 3/3 | 3/3 | 3/3 | 3/3 | 3/3 | 3/3 |
| | Fatty acid containing compound | Mg stearate | | | | | | | |
| | | Zn stearate | | 5 | 5 | 5 | 5 | 5 | 5 |
| | HALS | HALS1 | | 0.5 | 0.5 | 0.5 | 0.5 | 0.5 | 0.5 |
| | Calcium carbonate | | | | 5 | 10 | 40 | 100 | 120 |
| Characteristics | Mechanical characteristics | Tensile strength (MPa) | | 19.3 | 18.8 | 18.5 | 15.5 | 10.6 | 9.5 |
| | Flame retardancy | Vertical flame test | Pass rate (%) | 0 | 40 | 100 | 100 | 100 | 100 |

[Table 20]

| | | | | Comparative Example 42 | Comparative Example 43 | Example 69 | Example 63 | Example 70 | Example 71 |
|---|---|---|---|---|---|---|---|---|---|
| Composition | Polyolefin resin | PE | | 97 | 97 | 97 | 97 | 97 | 97 |
| | Silicone MB | Silicone MB (PE/Silicone gum) | | 3/3 | 3/3 | 3/3 | 3/3 | 3/3 | 3/3 |
| | Fatty acid containing compound | Mg stearate | | | | | | | |
| | | Zn stearate | | | 2 | 3 | 5 | 10 | 20 |
| | HALS | HALS1 | | 0.5 | 0.5 | 0.5 | 0.5 | 0.5 | 0.5 |
| | Calcium carbonate | | | 40 | 40 | 40 | 40 | 40 | 40 |
| Characteristics | Mechanical characteristics | Tensile strength (MPa) | | 16.5 | 16.0 | 15.9 | 15.5 | 15.0 | 14.3 |
| | Flame retardancy | Vertical flame test | Pass rate (%) | 0 | 0 | 100 | 100 | 100 | 100 |

[Table 21]

| | | | | Comparative Example 44 | Comparative Example 45 | Example 72 | Example 63 | Example 73 | Example 74 |
|---|---|---|---|---|---|---|---|---|---|
| Composition | Polyolefin resin | PE | | 100 | 99.5 | 98.5 | 97 | 95 | 90 |
| | Silicone MB | Silicone MB (PE/Silicone gum) | | | 0.5/0.5 | 1.5/1.5 | 3/3 | 5/5 | 10/10 |
| | Fatty acid containing compound | Mg stearate | | | | | | | |
| | | Zn stearate | | 5 | 5 | 5 | 5 | 5 | 5 |
| | HALS | HALS1 | | 0.5 | 0.5 | 0.5 | 0.5 | 0.5 | 0.5 |
| | Calcium carbonate | | | 40 | 40 | 40 | 40 | 40 | 40 |
| Characteristics | Mechanical characteristics | Tensile strength (MPa) | | 15.7 | 15.5 | 15.8 | 15.5 | 14.9 | 13.9 |
| | Flame retardancy | Vertical flame test | Pass rate (%) | 0 | 0 | 100 | 100 | 100 | 100 |

[Table 22]

| | | | | Comparative Example 46 | Example 75 | Example 76 | Example 77 | Example 78 | Example 79 | Example 80 | Comparative Example 47 |
|---|---|---|---|---|---|---|---|---|---|---|---|
| Composition | Polyolefin resin | PE | | 97 | 97 | 97 | 97 | 97 | 97 | 97 | 97 |
| | Silicone MB | Silicone MB (PE/ Silicone gum) | | 3/3 | 3/3 | 3/3 | 3/3 | 3/3 | 3/3 | 3/3 | 3/3 |
| | Fatty acid containing compound | Mg stearate | | 5 | 5 | 5 | 5 | 5 | 5 | 5 | 5 |
| | HALS | HALS1 | | | | | | | | | |
| | | HALS2 | | | 0.05 | 0.1 | 0.5 | 1 | 3 | 5 | 10 |
| | Calcium carbonate | | | 40 | 40 | 40 | 40 | 40 | 40 | 40 | 40 |
| Characteristics | Mechanical characteristics | Tensile strength (MPa) | | 15.7 | 15.8 | 15.7 | 15.6 | 15.2 | 15.4 | 15.0 | 14.2 |
| | Flame retardancy | Vertical flame test | Pass rate (%) | 0 | 80 | 100 | 100 | 100 | 100 | 100 | 60 |

[Table 23]

| | | | | Comparative Example 48 | Comparative Example 49 | Example 81 | Example 77 | Example 82 | Comparative Example 50 |
|---|---|---|---|---|---|---|---|---|---|
| Composition | Polyolefin resin | PE | | 97 | 97 | 97 | 97 | 97 | 97 |
| | Silicone MB | Silicone MB (PE/Silicone gum) | | 3/3 | 3/3 | 3/3 | 3/3 | 3/3 | 3/3 |
| | Fatty acid containing compound | Mg stearate | | 5 | 5 | 5 | 5 | 5 | 5 |
| | HALS | HALS1 | | | | | | | |
| | | HALS2 | | 0.5 | 0.5 | 0.5 | 0.5 | 0.5 | 0.5 |
| | Calcium carbonate | | | | 5 | 10 | 40 | 100 | 120 |
| Characteristics | Mechanical characteristics | Tensile strength (MPa) | | 19.4 | 18.9 | 18.6 | 15.6 | 10.7 | 9.6 |
| | Flame retardancy | Vertical flame test | Pass rate (%) | 0 | 40 | 100 | 100 | 100 | 100 |

[Table 24]

| | | | | Comparative Example 51 | Comparative Example 52 | Example 83 | Example 77 | Example 84 | Example 85 |
|---|---|---|---|---|---|---|---|---|---|
| Composition | Polyolefin resin | PE | | 97 | 97 | 97 | 97 | 97 | 97 |
| | Silicone MB | Silicone MB (PE/Silicone gum) | | 3/3 | 3/3 | 3/3 | 3/3 | 3/3 | 3/3 |
| | Fatty acid containing compound | Mg stearate | | | 2 | 3 | 5 | 10 | 20 |
| | HALS | HALS1 | | | | | | | |
| | | HALS2 | | 0.5 | 0.5 | 0.5 | 0.5 | 0.5 | 0.5 |
| | Calcium carbonate | | | 40 | 40 | 40 | 40 | 40 | 40 |
| Characteristics | Mechanical characteristics | Tensile strength (MPa) | | 16.6 | 16.1 | 16.0 | 15.6 | 15.1 | 14.4 |
| | Flame retardancy | Vertical flame test | Pass rate (%) | 0 | 0 | 100 | 100 | 100 | 100 |

[Table 25]

| | | | | Comparative Example 53 | Comparative Example 54 | Example 86 | Example 77 | Example 87 | Example 88 |
|---|---|---|---|---|---|---|---|---|---|
| Composition | Polyolefin resin | PE | | 100 | 99.5 | 98.5 | 97 | 95 | 90 |
| | Silicone MB | Silicone MB (PE/Silicone gum) | | | 0.5/0.5 | 1.5/1.5 | 3/3 | 5/5 | 10/10 |
| | Fatty acid containing compound | Mg stearate | | 5 | 5 | 5 | 5 | 5 | 5 |
| | HALS | HALS1 | | | | | | | |
| | | HALS2 | | 0.5 | 0.5 | 0.5 | 0.5 | 0.5 | 0.5 |
| | Calcium carbonate | | | 40 | 40 | 40 | 40 | 40 | 40 |
| Characteristics | Mechanical characteristics | Tensile strength (MPa) | | 15.8 | 15.6 | 15.9 | 15.6 | 15.0 | 14.0 |
| | Flame retardancy | Vertical flame test | Pass rate (%) | 0 | 0 | 100 | 100 | 100 | 100 |

For the insulating wires of Examples 1-88 and Comparative Examples 1-54 which have been obtained as described above, evaluations regarding flame retardancy and mechanical characteristics were made as follows.

<Flame retardancy>

For 10 insulating wires which have been obtained from each of Examples 1-88 and Comparative Examples 1-54, a vertical combustion test for a single wire was carried out based on JIS C3665-1. In addition, ratio of the insulating wires which satisfy all the requirements of the following (1A) and (2A) among the 10 insulating wires was set as pass rate (unit: %) and calculated based on the following formula (3A). The results are shown in Tables 1-25. Furthermore, in Tables 1-25, the criteria for determining the pass or failure in terms of flame retardancy were as described below.

(1A) The distance between the bottom end of a top support member supporting the insulating wire from the top and the start point of inflammation is ≥ 50 mm, and combustion of the insulating wire was not spread over ≤ 540 mm from the bottom end of the top support member.
(2A) Time from flame removal to self-extinguishment is ≤ 60 seconds.

Pass rate (%) = 100 × Number of insulating wires satisfying both the above criteria (1A) and (A2)/ Total number of insulating wires subjected to test (10 pieces) ... (3A)

Pass: pass rate of ≥ 80%
Failure: pass rate of < 80%

<Mechanical characteristics>

Evaluation of the mechanical characteristics was made based on the tensile strength which was measured by performing the elongation test according to JIS C3005 for the insulating wires of Examples 1-88 and Comparative Examples 1-54. The results are shown in Tables 1-25. In Tables 1-25, unit of the tensile strength is MPa, and the criteria for determining the pass or failure in terms of tensile strength were as described below. Furthermore, in the tensile test, the elongation speed was 200 mm/min and the gauge length was 20 mm.

≥ 10 MPa: pass
< 10 MPa: failure

From the results of Tables 1-25, the flame-retardant resin compositions of Examples 1-88 satisfied the pass criteria regarding the flame retardancy and mechanical characteristics. In contrast, the flame-retardant resin compositions of Comparative Examples 1-54 did not satisfy the pass criteria regarding at least one of the flame-retardancy and mechanical characteristics.
From the above, it was confirmed that excellent mechanical characteristics and also excellent flame retardancy can be secured according to the flame-retardant resin composition of the present invention.

EXPLANATIONS OF REFERRENCE NUMERALS

1 ... Internal conductor
2 ... Insulating body
3 ... Outer sheath (insulating body)
4 ... Insulating wire
10 ... Round cable (cable)
20 ... Optical fiber cable
24 ... Optical fiber
25 ... Outer sheath (insulating body)

## Claims

1. A composition which is a flame-retardant resin composition comprising:

   - a polyolefin resin (i), and, per 100 parts by mass (pbm) of the polyolefin resin;
   - 1.5-10 pbm of a silicone compound (ii);
   - 3-20 pbm of a fatty acid containing compound (iii);
   - 10 to < 120 pbm of calcium carbonate (iv); and
   - 0.05 to < 10 pbm of a triazine ring containing hindered amine compound (v) having a group of formula (1) :

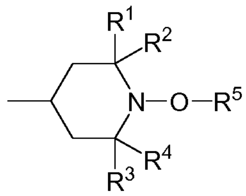

(1)

   wherein $R^1$-$R^4$ each independently are $C_{1-8}$-alkyl, and $R^5$ is $C_{1-18}$-alkyl, $C_{5-12}$-cycloalkyl, an $C_{7-25}$-aralkyl or $C_{6-12}$-aryl.

2. The composition of claim 1, wherein the amount of compound (v) is 0.1 to < 10 pbm per 100 pbm of the polyolefin resin.

3. The composition of claim 1, wherein in formula (1), $R^1$-$R^4$ each independently are $C_{1-3}$-alkyl and $R^5$ is cyclolalkyl.

4. The composition of any of claims 1-3, wherein the compound (v) is a compound of formula (2), wherein $R^9$ and $R^{10}$ each independently are a group of the formula (1) as defined in claim 1, and $R^{11}$ and $R^{12}$ each independently are $C_{1-18}$-alkyl:

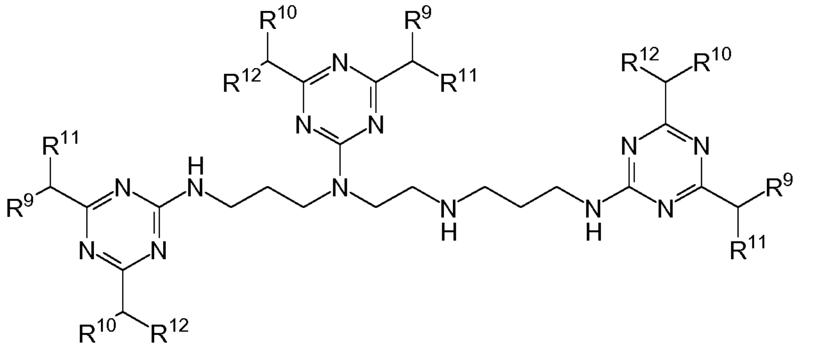

(2).

5. The composition of claim 4, wherein in formula (2) $R^{11}$ and $R^{12}$ are $C_{1-6}$-alkyl, and in the group of formula (1) $R^1$-$R^4$ each independently are $C_{1-3}$-alkyl and $R^5$ is $C_{5-8}$-cycloalkyl.

6. The composition of any of claims 1-5, which contains, per 100 pbm of the polyolefin resin (i), 1.5 to < 5 pbm of the silicone compound (ii), 3 to <5 pbm of the fatty acid containing compound (iii), and 10-40 pbm of the calcium carbonate (iv).

7. The composition of any of claims 1-6, wherein the polyolefin resin (i) is constituted by at least one of polyethylene, acid modified polyethylene, an ethylenevinyl acetate copolymer, an ethylene-ethyl acrylate copolymer, and polypropylene.

8. A cable comprising a conductor and at least one insulating body covering the conductor and being constituted by the composition of any of claims 1-7.

9. An optical fiber cable comprising an optical fiber; and an insulating body covering the optical fiber and being constituted by the composition of any of claims 1-7.

**Patentansprüche**

1. Zusammensetzung, die eine flammhemmende Harzzusammensetzung ist, umfassend:

   - ein Polyolefinharz (i) und, pro 100 Massenteile (pbm - "parts by mass") des Polyolefinharzes;
   - 1,5-10 pbm einer Silikonverbindung (ii);
   - 3-20 pbm einer Fettsäure-haltigen Verbindung (iii);
   - 10 bis < 120 pbm Calciumcarbonat (iv); und
   - 0,05 bis < 10 pbm einer Triazinring-haltigen gehinderten Aminverbindung (v), die eine Gruppe der Formel (1) aufweist:

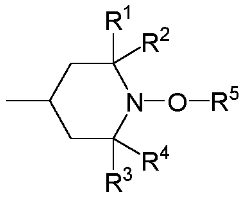

(1)

worin $R^1$-$R^4$ jeweils unabhängig $C_{1-8}$-Alkyl sind und $R^5$ $C_{1-18}$-Alkyl, $C_{5-12}$-Cycloalkyl, ein $C_{7-25}$-Aralkyl oder $C_{6-12}$-Aryl ist.

2. Zusammensetzung gemäß Anspruch 1, worin die Menge der Verbindung (v) 0,1 bis < 10 pbm pro 100 pbm des Polyolefinharzes beträgt.

3. Zusammensetzung gemäß Anspruch 1, worin in Formel (1) $R^1$-$R^4$ jeweils unabhängig voneinander $C_{1-3}$-Alkyl sind und $R^5$ Cyclolalkyl ist.

4. Zusammensetzung gemäß mindestens einem der Ansprüche 1-3, worin die Verbindung (v) eine Verbindung der Formel (2) ist, worin $R^9$ und $R^{10}$ jeweils unabhängig voneinander eine wie in Anspruch 1 definierte Gruppe der Formel (1) sind und $R^{11}$ und $R^{12}$ jeweils unabhängig voneinander $C_{1-18}$-Alkyl sind:

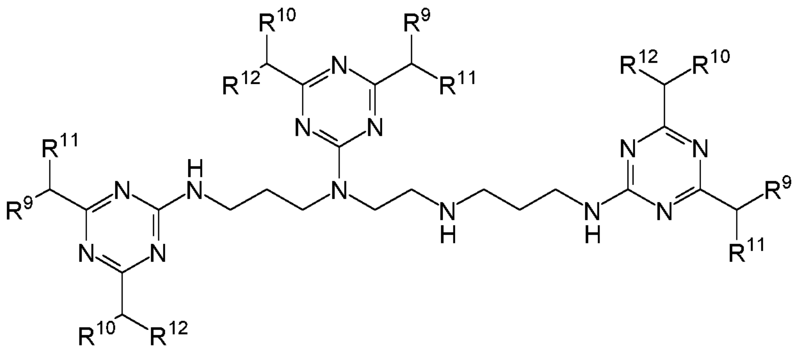

(2).

5. Zusammensetzung gemäß Anspruch 4, worin in Formel (2) $R^{11}$ und $R^{12}$ $C_{1-6}$-Alkyl sind und in der Gruppe der Formel (1) $R^1$-$R^4$ jeweils unabhängig voneinander $C_{1-3}$-Alkyl sind und $R^5$ $C_{5-8}$-Cycloalkyl ist.

6. Zusammensetzung gemäß mindestens einem der Ansprüche 1-5, die pro 100 pbm des Polyolefinharzes (i) 1,5 bis < 5 pbm der Silikonverbindung (ii), 3 bis <5 pbm der Fettsäure-haltigen Verbindung (iii) und 10-40 pbm Calciumcarbonat (iv) enthält.

7. Zusammensetzung gemäß mindestens einem der Ansprüche 1-6, worin das Polyolefinharz (i) aus mindestens einem aus Polyethylen, säuremodifiziertem Polyethylen, einem Ethylen-Vinylacetat-Copolymer, einem Ethylen-Ethylacrylat-Copolymer und Polypropylen besteht.

8. Kabel, umfassend einen Leiter und mindestens einen Isolierkörper, der den Leiter bedeckt und aus der Zusammensetzung gemäß mindestens einem der Ansprüche 1-7 besteht.

9. Lichtwellenleiterkabel, umfassend einen Lichtwellenleiter; und einen Isolierkörper, der den Lichtwellenleiter bedeckt und aus der Zusammensetzung gemäß mindestens einem der Ansprüche 1-7 besteht.

## Revendications

1. Composition qui est une composition de résine ignifuge comprenant :

- une résine de polyoléfine (i) et, pour 100 parties en masse (pbm) de la résine de polyoléfine ;
- 1,5 à 10 pbm d'un composé de silicone (ii) ;
- 3 à 20 pbm d'un composé contenant un acide gras (iii) ;
- 10 à < 120 pbm de carbonate de calcium (iv) ; et
- 0,05 à < 10 pbm d'un cycle triazine contenant un composé amine encombré (v) ayant un groupe de formule (1) :

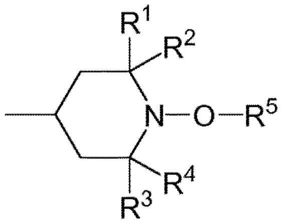
(1)

dans laquelle $R^1$ à $R^4$ sont chacun indépendamment un alkyle en $C_{1-8}$, et $R^5$ est un alkyle en $C_{1-18}$, un cycloalkyle en $C_{5-12}$, un aralkyle en $C_{7-25}$ ou un aryle en $C_{6-12}$.

2. Composition selon la revendication 1, dans laquelle la quantité de composé (v) est de 0,1 à < 10 pbm pour 100 pbm de la résine de polyoléfine.

3. Composition selon la revendication 1, dans laquelle dans la formule (1), $R^1$ à $R^4$ sont chacun indépendamment un alkyle en $C_{1-3}$ et $R^5$ est un cyclolalkyle.

4. Composition selon l'une quelconque des revendications 1 à 3, dans laquelle le composé (v) est un composé de formule (2), dans laquelle $R^9$ et $R^{10}$ sont chacun indépendamment un groupe de formule (1) tel que défini dans la revendication 1, et $R^{11}$ et $R^{12}$ sont chacun indépendamment un alkyle $C_{1-18}$ :

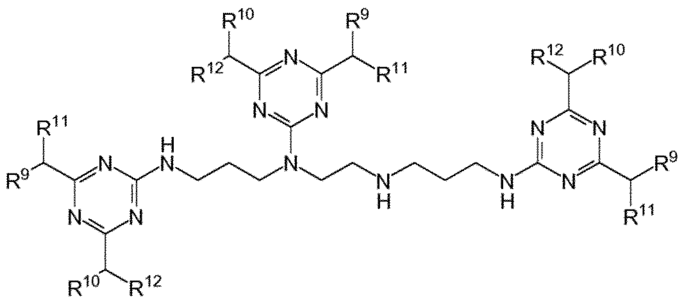
(2).

5. Composition selon la revendication 4, dans laquelle dans la formule (2), $R^{11}$ et $R^{12}$ sont un alkyle en $C_{1-6}$, et dans le groupe de formule (1), $R^1$ à $R^4$ sont chacun indépendamment un alkyle en $C_{1-3}$ et $R^5$ est un cycloalkyle en $C_{5-8}$.

6. Composition selon l'une quelconque des revendications 1 à 5, qui contient, pour 100 pbm de résine de polyoléfine (i), 1,5 à < 5 pbm du composé de silicone (ii), 3 à < 5 pbm du composé contenant un acide gras (iii), et 10 à 40 pbm de carbonate de calcium (iv).

7. Composition selon l'une quelconque des revendications 1 à 6, dans laquelle la résine de polyoléfine (i) est constituée d'au moins un parmi du polyéthylène, du polyéthylène modifié par un acide, un copolymère d'éthylène-acétate de vinyle, un copolymère d'éthylène-acrylate d'éthyle, et du polypropylène.

**8.** Câble comprenant un conducteur et au moins un corps isolant recouvrant le conducteur et étant constitué de la composition de l'une quelconque des revendications 1 à 7.

**9.** Câble à fibre optique comprenant une fibre optique ; et un corps isolant recouvrant la fibre optique et étant constitué de la composition de l'une quelconque des revendications 1 à 7.

Fig.1

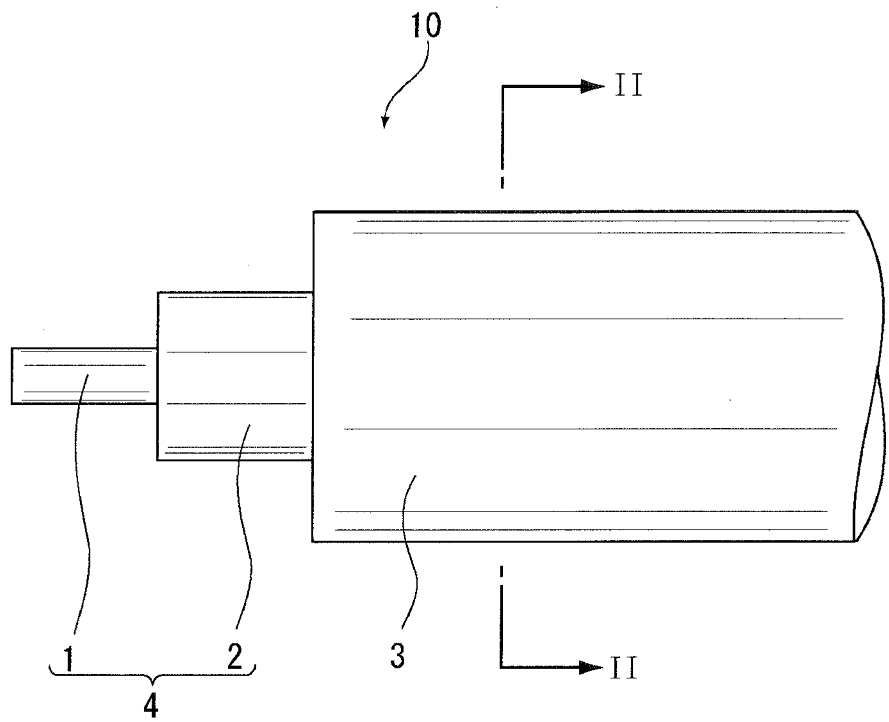

Fig.2

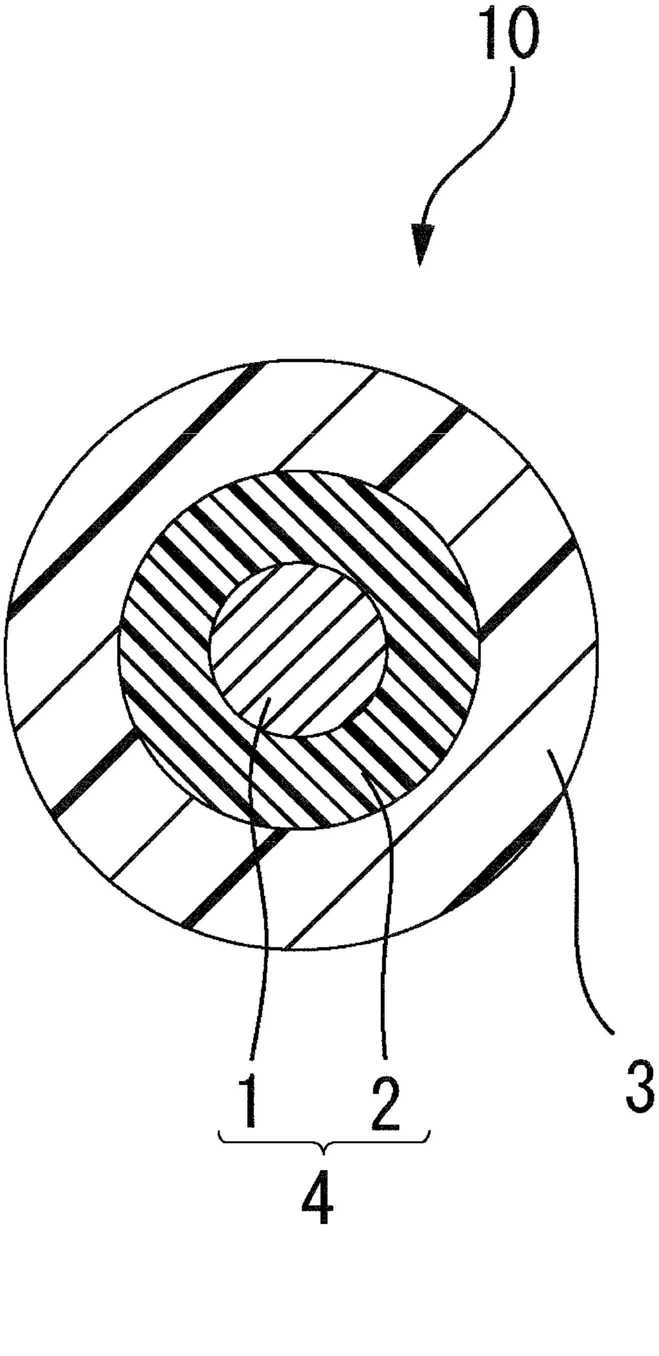

Fig.3

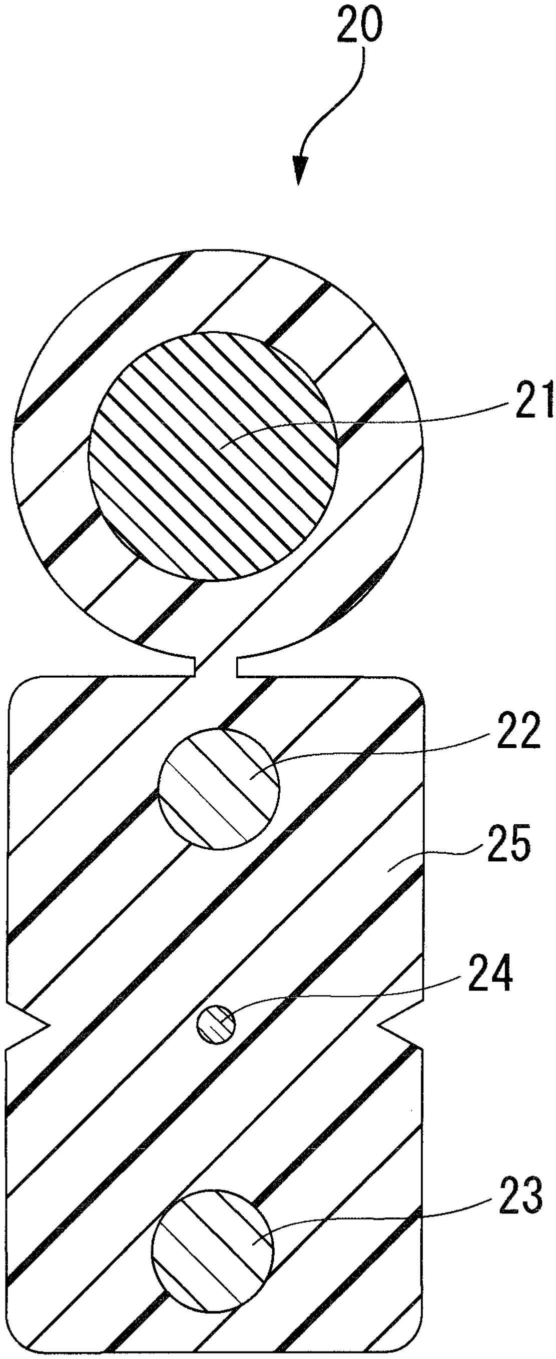

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9169918 A
- EP 3147322 A
- CN 1152471 A
- WO 2005030852 A
- WO 2014103904 A
- JP 2001089611 A